# EUROPEAN PATENT SPECIFICATION

(11) **EP 2 373 111 B1**
(45) Date of publication and mention of the grant of the patent: **10.08.2016**
(21) Application number: 11002760.4
(22) Date of filing: 01.04.2011
(51) Int. Cl.: H04W 74/08, H04W 36/06

(54) **Method of changing primary component carrier and related communication device**
Verfahren zur Änderung des primären Komponententrägers und zugehörige Kommunikationsvorrichtung
Procédé de changement de support de composant principal et dispositif de communication associé

(30) Priority: 02.04.2010 US 320326 P; 31.03.2011 US 201113076452
(43) Date of publication of application: 05.10.2011
(73) Proprietor: HTC Corporation, Taoyuan City 330 (TW)
(72) Inventor: Wu, Chih-Hsiang c/o HTC Corporation, Taoyuan City, Taoyuan County 330 (TW)
(74) Representative: Ljungberg, Robert

(56) References cited:
- LG ELECTRONICS INC: "Handover Execution Using Multiple Carriers", 3GPP DRAFT; R2-097059 HANDOVER_CA, no. Jeju; 20091109, 3 November 2009 (2009-11-03), XP050391407, [retrieved on 2009-11-03]
- NEC: "Mobility and Carrier Aggregation Signaling", 3GPP DRAFT; R2-101561, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20100222, 15 February 2010 (2010-02-15), XP050421697, [retrieved on 2010-02-15]
- LG ELECTRONICS: "Initial Access Procedure in LTE-Advanced", 3GPP DRAFT; R1-090210, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Ljubljana; 20090107, 7 January 2009 (2009-01-07), XP050318141, [retrieved on 2009-01-07]
- CATT: "Consideration on RACH procedure and RLF", 3GPP DRAFT; R2-096506, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050391093, [retrieved on 2009-11-03]
- NOKIA SIEMENS NETWORKS: "Stage 2 description of Carrier Aggregation", 3GPP TSG-RAN WG2 MEETING#69, SAN FRANCISCO, USA, 22 - 26 FEBRUARY 2010, CHANGE REQUEST 36.300 CR 0190,, no. R2-101846, 7 March 2010 (2010-03-07), pages 1-18, XP002642677, [retrieved on 2010-02-22]
- CATT: "Handover for Carrier Aggregation", 3GPP DRAFT; R2-093722, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050351955, [retrieved on 2009-06-23]

## Description

### Background of the Invention

### 1. Field of the Invention

The present invention relates to a method used in a wireless communications system and related communication device, and more particularly, to a method of changing primary component carrier in a wireless communications system and related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, a radio access network known as an evolved universal terrestrial radio access network (E-UTRAN) includes a plurality of evolved Node-Bs (eNBs) for communicating with a plurality of user equipments (UEs) and communicates with a core network including a mobility management entity (MME), serving gateway, etc for NAS (Non Access Stratum) control. NEC: XP50421697

3GPP Draft; R2-101561, 20100215 3rd Generation Partnership Project (3GPP), Mobile Competence Centre ; 650, route des Lucioles; F-06921 Sophia-Antipolis Cedex; France; Vol: RAN WG2, Nr: San Francisco, USA; 20100222, may be regarded as useful background art for understanding this disclosure. LG Electronics Inc XP50391407

3GPP Draft; R2-097059 Handover_CA 3rd Generation Partnership Project (3GPP), Mobile Competence Centre; 650, route des Lucioles; F-06921 Sophia-Antipolis Cedex; France; Nr:Jeju; 20091109, may be regarded as useful background art for understanding this disclosure.

The main purpose of a handover procedure is to maintain an ongoing connection which may be used for handling voice or data while the UE continuously moves. Since the UE may occasionally move from the coverage of one cell to the coverage of another cell, the ongoing connection must be transferred correspondingly to maintain the connectivity. Based on the measurement reports provided by the UE which include information of signal quality related to the current cell and neighbor cells, the eNB determines whether the handover procedure should be initiated. The eNB performs the handover procedure by sending the UE radio resource control (RRC) context information to neighbor cells and receiving corresponding radio resource configurations from neighbor cells. According to radio resource configurations, the eNB transmits a handover command to the UE, and the UE performs the handover procedure including a radio access channel (RACH) procedure in a target cell according to the handover command. Please note that, there is no dedicated handover command in the LTE system, a RRCConnectionReconfiguration message including a mobilityControlinfo is treated as the handover command to trigger the UE to perform the handover procedure.

The random access channel (RACH) procedure is performed by the UE to acquire uplink (UL) synchronization. The UE performs the RACH procedure by transmitting a random access preamble to the target eNB, receiving a corresponding random access response from the target eNB, and validating a preamble number included in the random access response. Then, the UE can transmit a resource request or a handover complete to the target eNB using resources indicated in the random access response. After a grant corresponding to the resource request or the handover complete is received from the target eNB, the UE is able to transmit and receive the data. Therefore, it is important for the UE to complete the RACH procedure.

A long term evolution-advanced (LTE-A) system, as its name implies, is an evolution of the LTE system. The LTE-A system targets faster switching between power states, improves performance at a cell edge, and includes subjects, such as bandwidth extension, coordinated multipoint transmission/reception (CoMP), UL multiple-input multiple-output (MIMO), etc.

For bandwidth extension, carrier aggregation is introduced to the LTE-A system by which two or more component carriers are aggregated to achieve a wider-band transmission. Accordingly, the LTE-A system can support a wider bandwidth up to 100MHz by aggregating a maximum number of 5 component carriers, where bandwidth of each component carrier is 20MHz and is backward compatible with 3GPP Rel-8. An LTE-A specification supports carrier aggregation for both continuous and non-continuous component carriers with each component carrier limited to a maximum of 110 resource blocks. The carrier aggregation increases a bandwidth flexibility by aggregating the non-continuous component carriers. A component carrier is used as an UL component carrier or a downlink (DL) component carrier. Further, there is a one-to-one correspondence between the UL component carrier and the DL component carrier, i.e., each UL component carrier is paired with a corresponding DL component carrier. In an LTE-A time-division duplex (TDD) system, the UL component carrier and DL component carrier are the same component carrier.

When the UE is configured with the carrier aggregation, the UE is allowed to receive and transmit data on one or multiple component carriers to increase the data rate. In the LTE-A system, it is possible for the eNB to configure the UE different numbers of UL and DL component carriers which depend on UL and DL aggregation capabilities, respectively. Moreover, the component carriers configured to the UE necessarily consists of one DL primary component carrier (PCC) and one UL primary component carrier. Component carriers other than the primary component carriers are named UL or DL secondary component carriers (SCCs). The numbers of UL and DL secondary component carriers are arbitrary, and are related to the UE capability and available radio resource. The UL and DL primary component carriers are used for establishing and re-establishing the radio resource control (RRC), and transmitting and receiving the system information. The UL or DL primary component carrier can not be de-activated, but can be changed by a handover procedure with the RACH procedure. However, component carriers on which the UE can perform the RACH procedure have not been known and the process of changing UL or DL primary component carrier can not be completed without performing the RACH procedure.

### Summary of the Invention

It is an object of the present invention to provide a method and related communication device for changing primary component carrier, to specify component carriers on which a random access channel procedure can be performed. This object can be achieved by the features as defined by the independent claims. Further embodiments are characterized by the dependent claims.

A method of changing a primary component carrier (PCC) for a mobile device in a wireless communication system is disclosed. The method comprises receiving a handover command from a network of the wireless communication system to change a first uplink primary component carrier of a first plurality of uplink component carriers to a second uplink primary component carrier of a second plurality of uplink component carrier or a first downlink primary component carrier of a first plurality of downlink component carriers to a second downlink primary component carrier of a second plurality of downlink component carrier, and performing a random access channel (RACH) procedure on at least one of uplink component carriers according to the handover command.

A communication device of a wireless communication system for changing a primary component carrier (PCC) is disclosed. The communication device comprises a processor for executing a program, and a memory coupled to the processor for storing the program. The program instructs the processor to perform steps of receiving a handover command from a network of the wireless communication system to change a first uplink primary component carrier of a first plurality of uplink component carriers to a second uplink primary component carrier of a second plurality of uplink component carrier or a first downlink primary component carrier of a first plurality of downlink component carriers to a second downlink primary component carrier of a second plurality of downlink component carrier, and performing a random access channel (RACH) procedure on at least one of uplink component carriers according to the handover command.

These and other objectives of the present invention will no doubt become obvious to those of ordinary skill in the art after reading the following detailed description of the preferred embodiment that is illustrated in the various figures and drawings.

### Brief Description of the Drawings

FIG.1 is a schematic diagram of a wireless communications system according to an example of the present disclosure.
FIG.2 is a schematic diagram of a communication device according to an example of the present disclosure.
FIG.3 is a flowchart of a process according to an example of the present disclosure.
FIG.4 is a schematic diagram of carrier aggregation according to an example of the present disclosure.

### Detailed Description

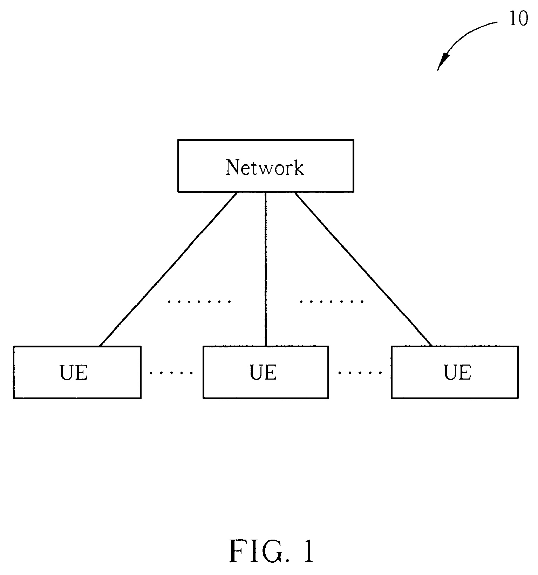

Please refer to FIG.1, which is a schematic diagram of a wireless communication system 10 according to an example of the present disclosure. The wireless communication system 10, such as a long term evolution-advanced (LTE-A) system or other mobile communication systems supporting a carrier aggregation, is briefly composed of a network and a plurality of user equipments (UEs). In FIG.1, the network and the UEs are simply utilized for illustrating the structure of the wireless communication system 10. Practically, the network can be referred as to an E-UTRAN (evolved-UTAN) comprising a plurality of evolved Node-Bs (eNBs) and relays in the LTE-A system. The UEs can be devices such as mobile phones, laptops, tablet computers, electronic books, and portable computer systems. Besides, the network and the UE can be seen as a transmitter or receiver according to transmission direction, e.g., for an uplink (UL), the UE is the transmitter and the network is the receiver, and for a downlink (DL), the network is the transmitter and the UE is the receiver.

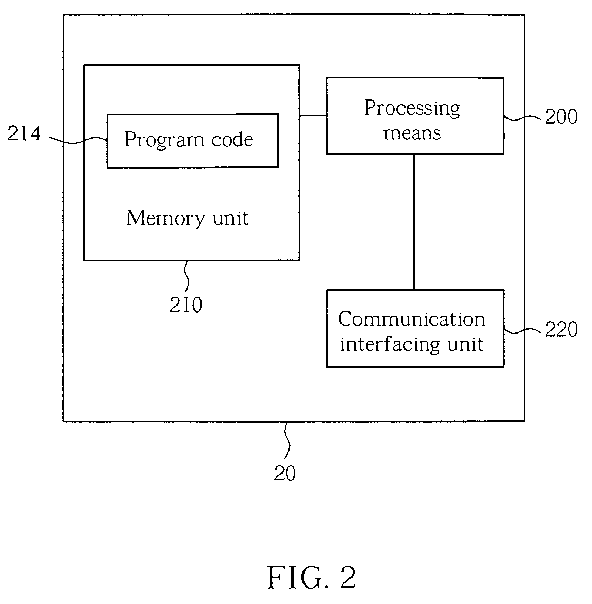

Please refer to FIG.2, which is a schematic diagram of a communication device 20 according to an example of the present disclosure. The communication device 20 can be the UE or the network shown in FIG.1, but is not limited herein. The communication device 20 may include a processing means 200 such as a microprocessor or Application Specific Integrated Circuit (ASIC), a memory unit 210 and a communication interfacing unit 220. The memory unit 210 may be any data storage device that can store a program code 214, accessed by the processing means 200. Examples of the memory unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a radio transceiver and can exchange wireless signals with the network according to processing results of the processing means 200.

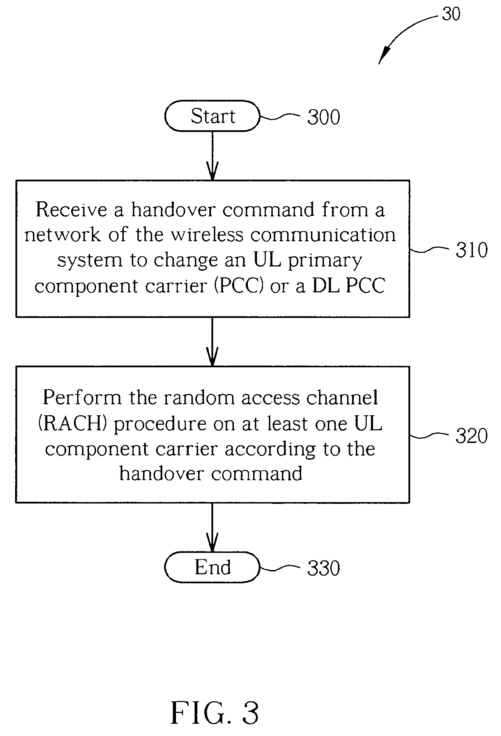

Please refer to FIG.3, which is a flowchart of a process 30 according to an example of the present disclosure. The process 30 is utilized in a UE of a wireless communication system shown in FIG.1. The process 30 may be compiled into the program code 214 and includes the following steps:
Step 300: Start.
Step 310: Receive a handover command from a network of the wireless communication system to change an UL primary component carrier (PCC) or a DL PCC.
Step 320: Perform the random access channel (RACH) procedure on at least one UL component carrier according to the handover command.
Step 330: End.

According to the process 30, the UE performs the RACH procedure on at least one UL component carrier according to the handover command when the UE receives the handover command from the eNB to change the configured UL PCC to a second UL PCC or the configured DL PCC to a second DL PCC. In detail, the UE may perform the RACH procedure on one or more UL component carriers which are determined in advance. Alternatively, the UE may perform the RACH procedure on one or more UL component carriers information of which is included in the handover command. Since the UE may know exactly which component carries the UE may perform RACH procedure on through the handover command, the change of the UL PCC or DL PCC can be achieved successfully.

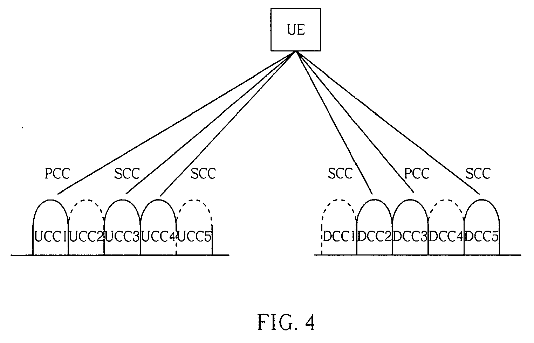

Please refer to FIG.4, which is a schematic diagram of carrier aggregation according to an example of the present disclosure. There are 5 UL component carriers (termed as UCC1-UCC5) and 5 DL component carriers (termed as DCC1-DCC5). Among these component carriers, UCC1 is configured as the UL PCC to the UE, and DCC3 is configured as the DL PCC to the UE. UCC3 and UCC4 are configured as UL SCCs to the UE, and DCC2 and DCC5 are configured as DL SCCs to the UE. Other component carriers may be available to be configured, or have been configured to other UEs. Since each UL component carrier is paired a DL component carrier, each UCCn is paired with DCCn for ease of illustration, i.e., UCC1 is paired with DCC1 and so on, and the pairing rule is not limited herein.

When the UE receives the handover command with information of new UL component carriers and a notification to change the UL PCC or the DL PCC, the UE performs the RACH on a group of new UL component carriers. For example, if information of UCC2, UCC3 and UCC4 is included in the handover command, the UE performs the RACH on one, two or all of these UL component carriers. In detail, the UE may simply perform the RACH procedure on all new UL component carriers. Alternatively, the UE performs the RACH procedure on some of new UL component carriers, depending on the UE capability, reliability of the new UL component carriers, or/and power consumption of the UE. For example, the UE may be capable of performing the RACH procedure on at most two UL component carriers, and then the UE selects two of new UL component carriers, i.e., UCC2 and UCC4, to perform the RACH procedure on. Considering power consumption of the UE, even though the UE is capable of using all new UL component carriers, the UE only selects one or some of new UL component carriers to reduce the power consumption. Please note that, the selection strategy of above cases may depend on reliability of carriers or a predetermined rule, and is not limited herein.

When the UE receives the handover command with information of a new UL PCC and the notification to change the UL PCC to the second UL PCC of the second plurality of UL component carriers or the DL PCC to the second DL PCC of the second plurality of UL component carriers, the UE performs the RACH procedure on the new UL PCC. For example, if the UCC3 is configured as the new UL PCC to the UE in the handover command, the UE performs the RACH procedure on the UCC3.

When the UE receives the handover command with the notification to change the UL PCC to the second UL PCC or the DL PCC to the second DL PCC, it is possible that information of the new UL PCC is not included in the handover command. Then, the UE may arbitrarily select a configured UL component carrier to perform the RACH procedure on. In detail, the UE may select a configured UL component carrier based on the reliability of the configured UL component carrier. For example, if the UE determines that UCC3 is the most reliable configured UL component carrier, the UE performs the RACH procedure on UCC3. The reliability may be related to quality of a received signal at the eNB. The information of the reliability of configured UL component carriers may be obtained from the feedback from the eNB and the method of obtaining information of the reliability is not limited herein. Please note that, the selection strategy may also be based on a predetermined rule, i.e., the UE always selects the configured UL PCC, and is not limited herein. Further, the UE may also perform the RACH procedure on an UL component carrier which is configured on a broadcasting control channel (BCCH), when information of the new UL PCC is not included in the handover command.

On the other hand, when the UE receives the handover command with the notification to change the UL PCC or the DL PCC, information of a new DL PCC is included instead of the new UL PCC in the handover command. Then, the UE performs the RACH procedure on an UL component carrier corresponding to the new DL PCC information of which is included in the handover command. For example, if DCC5 is configured as a new DL PCC in the handover command is, the UE performs the RACH procedure on the UCC5 since UCC5 is paired with DCC5 as mentioned above.

Please note that, consecutively grouped UL component carriers or DL component carriers shown in FIG.4 are simply used for illustration. Component carriers can be aggregated non-consecutively, and UL component carriers and DL component carriers can even be arranged alternatively according to the radio resource configuration. The number of UL or DL component carriers is also not limited to 5, which is used for ease of illustration. In short, the arrangement and numbering of component carriers used in FIG.4 are simply used for illustration and are not limited herein. Furthermore, each component carrier corresponds to a distinct frequency band when the wireless system operates in a frequency-division duplex (FDD) mode. When the wireless system operates in a time-division duplex (TDD) mode, i.e., UL and DL are separated in time but not frequency, a component carrier is used for both an UL component carrier and a DL component carrier. Thus, those skilled in the art should make different alterations and modifications according to a mode of operation, which are not limited herein.

Please note that, the abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (SiP), a computer on module (COM), and the communication device 20.

In conclusion, the exemplary examples and means are provided for performing the RACH procedure when the handover command with a notification to change the UL PCC or the DL PCC is received. According to information included in the handover command, the UE selects at least one uplink component carrier to perform the RACH procedure on, so as to complete the procedure of changing PCC.

Those skilled in the art will readily observe that numerous modifications and alterations of the device and method may be made while retaining the teachings of the invention. Accordingly, the above disclosure should be construed as limited only by the appended claims.

## Claims

1. A method of changing a primary component carrier, PCC, for a mobile device (20) in a wireless communication system (10), the method comprising:
(310) receiving, by the mobile device, a handover command from a network of the wireless communication system to change a first uplink PCC of a first plurality of uplink component carriers to a second uplink PCC of a second plurality of uplink component carriers or a first downlink PCC of a first plurality of downlink component carriers to a second downlink PCC of a second plurality of downlink component carriers; and
(320) performing, by the mobile device, a random access channel, RACH, procedure on at least one of uplink component carriers according to the handover command, **characterised in that**
wherein performing, by the mobile device, the RACH procedure on the at least one of uplink component carriers according to the handover command comprises, based on the received handover command, performing, by the mobile device, the RACH procedure on a paired uplink component carrier of the second downlink PCC of the second plurality of downlink component carriers when information of the second downlink PCC is included in the handover command but information of the second uplink PCC is not included in the handover command.

2. The method of claim 1, wherein performing the RACH procedure on the at least one of uplink component carriers according to the handover command comprises performing the RACH procedure on a component carrier of the second plurality of uplink component carriers when the information of the second plurality of uplink component carriers is included in the handover command.

3. The method of claim 1, wherein performing the RACH procedure on the at least one of uplink component carriers according to the handover command comprises performing the RACH procedure on the second uplink PCC of the second plurality of uplink component carriers when the information of the second uplink PCC is included in the handover command.

4. The method of claim 1, wherein performing the RACH procedure on the at least one of uplink component carriers according to the handover command comprises performing the RACH procedure on a component carrier of the second plurality of uplink component carriers based on at least one of: arbitrarily selection of the uplink component carrier, reliability of the configured uplink component carrier, a predetermined rule, when the information of the second uplink PCC is not included in the handover command.

5. The method of claim 1, wherein performing the RACH procedure on the at least one of uplink component carriers according to the handover command comprises performing the RACH procedure on an uplink component carrier configured on a broadcasting control channel, BCCH, when the information of the second uplink PCC is not included in the handover command.

6. The method of claim 1, wherein in a time-division duplex, TDD, mode, a component carrier is used for both an UL component carrier and a DL component carrier.

7. A communication device (20) of a wireless communication system (10) for changing a primary component carrier, PCC, the communication device comprising:
a processor (200) for executing a program (214); and
a memory (210) coupled to the processor for storing the program; wherein the program is configured to instruct the processor to:
receive a handover command from a network of the wireless communication system to change a first uplink PCC of a first plurality of uplink component carriers to a second uplink PCC of a second plurality of uplink component carriers or a first downlink primary component carrier of a first plurality of downlink component carriers to a second downlink PCC of a second plurality of downlink component carriers; and
perform a random access channel, RACH, procedure on at least one of uplink component carriers according to the handover command **characterised in that** the program is configured to instruct the processor to
perform the RACH procedure on the at least one of uplink component carriers according to the handover command;
perform, based on the received handover command, the RACH procedure on a paired uplink component carrier of the second downlink PCC of the second plurality of downlink component carriers when information of the second downlink PCC is included in the handover command but information of the second uplink PCC is not included in the handover command.

8. The communication device of claim 7, wherein the program is configured to instruct the processor to perform the RACH procedure on the at least one of uplink component carriers according to the handover command so as to perform the RACH procedure on a component carrier of the second plurality of uplink component carriers when the information of the second plurality of uplink component carriers is included in the handover command.

9. The communication device of claim 7, wherein the program is configured to instruct the processor to perform the RACH procedure on the at least one of uplink component carriers according to the handover command so as to perform the RACH procedure on the second uplink PCC of the second plurality of uplink component carriers when the information of the second uplink PCC is included in the handover command.

10. The communication device of claim 7, wherein the program is configured to instruct the processor to perform the RACH procedure on the at least one of uplink component carriers according to the handover command so as to perform the RACH procedure on a component carrier of the second plurality of uplink component carriers based on at least one of: arbitrarily selection of the uplink component carrier, reliability of the configured uplink component carrier, a predetermined rule, when the information of the second uplink PCC is not included in the handover command.

11. The communication device of claim 7, wherein the program is configured to instruct the processor to perform the RACH procedure on the at least one of uplink component carriers according to the handover command so as to perform the RACH procedure on an uplink component carrier configured on a broadcasting control channel, BCCH, when the information of the second uplink PCC is not included in the handover command.

12. The communication device of claim 7, wherein in a time-division duplex, TDD, mode, a component carrier is configured to be used for both an UL component carrier and a DL component carrier.

13. The communication device according to any preceding claims 7 to 12, further comprising:
a transmitter configured to the uplink transmission,
a receiver configured to the downlink reception, wherein the communication device comprises a user equipment.

14. The communication device according to claim 13, wherein the user equipment comprises a mobile phone, a laptop, a table computer, or an electronic book.

15. A computer program product, comprising a computer program code means (214) configured to perform any of the method of claims 1 to 6 when executed.

## Patentansprüche

1. Ein Verfahren zum Ändern eines Primärkomponententrägers, PCC, für eine mobile Vorrichtung (20) in einem drahtlosen Kommunikationssystem (10), wobei das Verfahren Folgendes beinhaltet:
(310) Empfangen, durch die mobile Vorrichtung, eines Übergabebefehls von einem Netzwerk des drahtlosen Kommunikationssystems, um einen ersten Aufwärtsstrecken-PCC einer ersten Vielzahl von Aufwärtskomponententrägern in einen zweiten Aufwärtsstrecken-PCC einer zweiten Vielzahl von Aufwärtskomponententrägern oder einen ersten Abwärtsstrecken-PCC einer ersten Vielzahl von Abwärtsstreckenkomponententrägern in einen zweiten Abwärtsstrecken-PCC einer zweiten Vielzahl von Abwärtsstreckenkomponententrägern zu ändern; und
(320) Durchführen, durch die mobile Vorrichtung, eines Direktzugriffkanalvorgangs, RACH-Vorgangs, auf mindestens einem der Aufwärtskomponententräger gemäß dem Übergabebefehl, **dadurch gekennzeichnet, dass**
beim Durchführen, durch die mobile Vorrichtung, der RACH-Vorgang auf dem mindestens einen der Aufwärtskomponententräger gemäß dem Übergabebefehl basierend auf dem empfangenen Übergabebefehl das Durchführen, durch die mobile Vorrichtung, des RACH-Vorgangs auf einem gepaarten Aufwärtskomponententräger des zweiten Abwärtsstrecken-PCC der zweiten Vielzahl von Abwärtsstreckenkomponententrägern beinhaltet, wenn Informationen des zweiten Abwärtsstrecken-PCC in dem Übergabebefehl eingeschlossen sind, jedoch Informationen des zweiten Aufwärtsstrecken-PCC in dem Übergabebefehl nicht eingeschlossen sind.

2. Verfahren gemäß Anspruch 1, wobei das Durchführen des RACH-Vorgangs auf dem mindestens einen der Aufwärtskomponententräger gemäß dem Übergabebefehl das Durchführen des RACH-Vorgangs auf einem Komponententräger der zweiten Vielzahl von Aufwärtskomponententrägern beinhaltet, wenn die Informationen der zweiten Vielzahl von Aufwärtskomponententrägern in dem Übergabebefehl eingeschlossen sind.

3. Verfahren gemäß Anspruch 1, wobei das Durchführen des RACH-Vorgangs auf dem mindestens einen der Aufwärtskomponententräger gemäß dem Übergabebefehl das Durchführen des RACH-Vorgangs auf dem zweiten Aufwärtsstrecken-PCC der zweiten Vielzahl von Aufwärtskomponententrägern beinhaltet, wenn die Informationen des zweiten Aufwärtsstrecken-PCC in dem Übergabebefehl eingeschlossen sind.

4. Verfahren gemäß Anspruch 1, wobei das Durchführen des RACH-Vorgangs auf dem mindestens einen der Aufwärtskomponententräger gemäß dem Übergabebefehl das Durchführen des RACH-Vorgangs auf einem Komponententräger der zweiten Vielzahl von Aufwärtskomponententrägern beinhaltet, basierend auf mindestens einem der Folgenden: willkürlich Auswahl des Aufwärtskomponententrägers, Zuverlässigkeit des konfigurierten Aufwärtskomponententrägers, eine vorbestimmte Regel, wenn die Informationen des zweiten Aufwärtskomponententrägers in dem Übergabebefehl nicht eingeschlossen sind.

5. Verfahren gemäß Anspruch 1, wobei das Durchführen des RACH-Vorgangs auf dem mindestens einen der Aufwärtskomponententräger gemäß dem Übergabebefehl das Durchführen des RACH-Vorgangs auf einem Aufwärtskomponententräger beinhaltet, der auf einem Rundfunksteuerkanal, BCCH, konfiguriert ist, wenn die Informationen des zweiten Aufwärtsstrecken-PCC in dem Übergabebefehl nicht eingeschlossen sind.

6. Verfahren gemäß Anspruch 1, wobei in einem TDD-Funkübertragungsmodus (time division duplex) ein Komponententräger sowohl für einen UL-Komponententräger als auch einen DL-Komponententräger verwendet wird.

7. Eine Kommunikationsvorrichtung (20) eines drahtlosen Kommunikationssystems (10) zum Ändern eines Primärkomponententrägers, PCC, wobei die Kommunikationsvorrichtung Folgendes beinhaltet:
einen Prozessor (200) zum Ausführen eines Programms (214); und
einen Speicher (210), der mit dem Prozessor verbunden ist, um das Programm zu speichern; wobei das Programm konfiguriert ist, um den Prozessor zu Folgendem anzuweisen:
Empfangen eines Übergabebefehls von einem Netzwerk des drahtlosen Kommunikationssystems, um einen ersten Aufwärtsstrecken-PCC einer ersten Vielzahl von Aufwärtskomponententrägern in einen zweiten Aufwärtsstrecken-PCC einer zweiten Vielzahl von Aufwärtskomponententrägern oder einen ersten Abwärtsstreckenprimärkomponententräger einer ersten Vielzahl von Abwärtsstreckenkomponententrägern in einen zweiten Abwärtsstrecken-PCC einer zweiten Vielzahl von Abwärtsstreckenkomponententrägern zu ändern; und
Durchführen eines Direktzugriffkanalvorgangs, RACH-Vorgangs, auf mindestens einem der Aufwärtskomponententräger gemäß dem Übergabebefehl, **dadurch gekennzeichnet, dass** das Programm konfiguriert ist, um den Prozessor zu Folgendem anzuweisen:
Durchführen des RACH-Vorgangs auf dem mindestens einen der Aufwärtskomponententräger gemäß dem Übergabebefehl;
Durchführen, basierend auf dem empfangenen Übergabebefehl, des RACH-Vorgangs auf einem gepaarten Aufwärtskomponententräger des zweiten Abwärtsstrecken-PCC der zweiten Vielzahl von Abwärtsstreckenkomponententrägern, wenn Informationen des zweiten Abwärtsstrecken-PCC in dem Übergabebefehl eingeschlossen sind, jedoch Informationen des zweiten Aufwärtsstrecken-PCC in dem Übergabebefehl nicht eingeschlossen sind.

8. Kommunikationsvorrichtung gemäß Anspruch 7, wobei das Programm konfiguriert ist, um den Prozessor zu Folgendem anzuweisen: Durchführen des RACH-Vorgangs auf dem mindestens einen der Aufwärtskomponententräger gemäß dem Übergabebefehl, um den RACH-Vorgang auf einem Komponententräger der zweiten Vielzahl von Aufwärtskomponententrägern durchzuführen, wenn die Informationen der zweiten Vielzahl von Aufwärtskomponententrägern in dem Übergabebefehl eingeschlossen sind.

9. Kommunikationsvorrichtung gemäß Anspruch 7, wobei das Programm konfiguriert ist, um den Prozessor zu Folgendem anzuweisen: Durchführen des RACH-Vorgangs auf dem mindestens einen der Aufwärtskomponententräger gemäß dem Übergabebefehl, um den RACH-Vorgang auf dem zweiten Aufwärtsstrecken-PCC der zweiten Vielzahl von Aufwärtskomponententrägern durchzuführen, wenn die Informationen des zweiten Aufwärtsstrecken-PCC in dem Übergabebefehl nicht eingeschlossen sind.

10. Kommunikationsvorrichtung gemäß Anspruch 7, wobei das Programm konfiguriert ist, um den Prozessor zu Folgendem anzuweisen: Durchführen des RACH-Vorgangs auf dem mindestens einen der Aufwärtskomponententräger gemäß dem Übergabebefehl, um den RACH-Vorgang auf einem Komponententräger der zweiten Vielzahl von Aufwärtskomponententrägern durchzuführen, basierend auf mindestens einem der Folgenden: willkürlich Auswahl des Aufwärtskomponententrägers, Zuverlässigkeit des konfigurierten Aufwärtskomponententrägers, eine vorbestimmte Regel, wenn die Informationen des zweiten Aufwärtskomponententrägers in dem Übergabebefehl nicht eingeschlossen sind.

11. Kommunikationsvorrichtung gemäß Anspruch 7, wobei das Programm konfiguriert ist, um den Prozessor zu Folgendem anzuweisen: Durchführen des RACH-Vorgangs auf dem mindestens einen der Aufwärtskomponententräger gemäß dem Übergabebefehl, um den RACH-Vorgang auf einem Aufwärtskomponententräger durchzuführen, der auf einem Rundfunksteuerkanal, BCCH, konfiguriert ist, wenn die Informationen des zweiten Aufwärtsstrecken-PCC in dem Übergabebefehl nicht eingeschlossen sind.

12. Kommunikationsvorrichtung gemäß Anspruch 7, wobei in einem TDD-Funkübertragungsmodus (time division duplex) ein Komponententräger konfiguriert ist, um sowohl für einen UL-Komponententräger als auch einen DL-Komponententräger verwendet zu werden.

13. Kommunikationsvorrichtung gemäß einem der vorhergehenden Ansprüche 7 bis 12, die ferner Folgendes beinhaltet:
ein Sendegerät, das für die Aufwärtsstreckenübertragung konfiguriert ist,
einen Empfänger, der für den Abwärtsstreckenempfang konfiguriert ist, wobei die Kommunikationsvorrichtung ein Benutzergerät beinhaltet.

14. Kommunikationsvorrichtung gemäß Anspruch 13, wobei das Benutzergerät ein Mobiltelefon, einen Laptop, einen Tablett-Computer oder ein elektronisches Buch beinhaltet.

15. Ein Computerprogrammprodukt, das ein Computerprogrammcodierungsmittel (214) beinhaltet, das konfiguriert ist, um jegliche der Verfahren gemäß den Ansprüchen 1 bis 6, wenn ausgeführt, durchzuführen.

## Revendications

1. Une méthode de changement d'une porteuse de composants primaires, PCC, pour un dispositif mobile (20) dans un système de communication sans fil (10), la méthode comprenant:
(310) la réception, par le dispositif mobile, d'une commande de transfert en provenance d'un réseau du système de communication sans fil pour changer une première PCC de liaison montante d'une première pluralité de porteuses de composants de liaison montante en une deuxième PCC de liaison montante d'une deuxième pluralité de porteuses de composants de liaison montante ou une première PCC de liaison descendante d'une première pluralité de porteuses de composants de liaison descendante en une deuxième PCC de liaison descendante d'une deuxième pluralité de porteuses de composants de liaison descendante ; et
(320) la réalisation, par le dispositif mobile, d'une procédure de canal d'accès aléatoire, RACH, sur au moins une des porteuses de composants de liaison montante conformément à la commande de transfert, **caractérisée en ce que** la réalisation, par le dispositif mobile, de la procédure RACH sur cette au moins une des porteuses de composants de liaison montante conformément à la commande de transfert comprend, sur la base de la commande de transfert reçue, la réalisation, par le dispositif mobile, de la procédure RACH sur une porteuse de composants de liaison montante en paire de la deuxième PCC de liaison descendante de la deuxième pluralité de porteuses de composants de liaison descendante lorsque l'information de la deuxième PCC de liaison descendante est incluse dans la commande de transfert mais que l'information de la deuxième PCC de liaison montante n'est pas incluse dans la commande de transfert.

2. La méthode de la revendication 1, dans laquelle la réalisation de la procédure RACH sur cette au moins une des porteuses de composants de liaison montante conformément à la commande de transfert comprend la réalisation de la procédure RACH sur une porteuse de composants de la deuxième pluralité de porteuses de composants de liaison montante lorsque l'information de la deuxième pluralité de porteuses de composants de liaison montante est incluse dans la commande de transfert.

3. La méthode de la revendication 1, dans laquelle la réalisation de la procédure RACH sur cette au moins une des porteuses de composants de liaison montante conformément à la commande de transfert comprend la réalisation de la procédure RACH sur la deuxième PCC de liaison montante de la deuxième pluralité de porteuses de composants de liaison montante lorsque l'information de la deuxième PCC de liaison montante est incluse dans la commande de transfert.

4. La méthode de la revendication 1, dans laquelle la réalisation de la procédure RACH sur cette au moins une des porteuses de composants de liaison montante conformément à la commande de transfert comprend la réalisation de la procédure RACH sur une porteuse de composants de la deuxième pluralité de porteuses de composants de liaison montante sur la base d'au moins un élément parmi : une sélection arbitraire de la porteuse de composants de liaison montante, une fiabilité de la porteuse de composants de liaison montante configurée, une règle prédéterminée, lorsque l'information de la deuxième PCC de liaison montante n'est pas incluse dans la commande de transfert.

5. La méthode de la revendication 1, dans laquelle la réalisation de la procédure RACH sur cette au moins une des porteuses de composants de liaison montante conformément à la commande de transfert comprend la réalisation de la procédure RACH sur une porteuse de composants de liaison montante configurée sur un canal de contrôle de diffusion, BCCH, lorsque l'information de la deuxième PCC de liaison montante n'est pas incluse dans la commande de transfert.

6. La méthode de la revendication 1, dans laquelle dans un mode duplex à répartition dans le temps, TDD, une porteuse de composants est utilisée pour à la fois une porteuse de composants UL et une porteuse de composants DL.

7. Un dispositif de communication (20) d'un système de communication sans fil (10) pour changer une porteuse de composants primaires, PCC, le dispositif de communication comprenant :
un processeur (200) pour exécuter un programme (214) ; et
une mémoire (210) couplée au processeur pour stocker le programme ; dans lequel le programme est configuré pour ordonner au processeur de :
recevoir une commande de transfert en provenance d'un réseau du système de communication sans fil pour changer une première PCC de liaison montante d'une première pluralité de porteuses de composants de liaison montante en une deuxième PCC de liaison montante d'une deuxième pluralité de porteuses de composants de liaison montante ou une première porteuse de composants primaires de liaison descendante d'une première pluralité de porteuses de composants de liaison descendante en une deuxième PCC de liaison descendante d'une deuxième pluralité de porteuses de composants de liaison descendante ; et
réaliser une procédure de canal d'accès aléatoire, RACH, sur au moins une des porteuses de composants de liaison montante conformément à la commande de transfert, **caractérisé en ce que** le programme est configuré pour ordonner au processeur de
réaliser la procédure RACH sur cette au moins une des porteuses de composants de liaison montante conformément à la commande de transfert ;
réaliser, sur la base de la commande de transfert reçue, la procédure RACH sur une porteuse de composants de liaison montante en paire de la deuxième PCC de liaison descendante de la deuxième pluralité de porteuses de composants de liaison descendante lorsque l'information de la deuxième PCC de liaison descendante est incluse dans la commande de transfert mais que l'information de la deuxième PCC de liaison montante n'est pas incluse dans la commande de transfert.

8. Le dispositif de communication de la revendication 7, dans lequel le programme est configuré pour ordonner au processeur de réaliser la procédure RACH sur cette au moins une des porteuses de composants de liaison montante conformément à la commande de transfert de sorte à réaliser la procédure RACH sur une porteuse de composants de la deuxième pluralité de porteuses de composants de liaison montante lorsque l'information de la deuxième pluralité de porteuses de composants de liaison montante est incluse dans la commande de transfert.

9. Le dispositif de communication de la revendication 7, dans lequel le programme est configuré pour ordonner au processeur de réaliser la procédure RACH sur cette au moins une des porteuses de composants de liaison montante conformément à la commande de transfert de sorte à réaliser la procédure RACH sur la deuxième PCC de liaison montante de la deuxième pluralité de porteuses de composants de liaison montante lorsque l'information de la deuxième PCC de liaison montante est incluse dans la commande de transfert.

10. Le dispositif de communication de la revendication 7, dans lequel le programme est configuré pour ordonner au processeur de réaliser la procédure RACH sur cette au moins une des porteuses de composants de liaison montante conformément à la commande de transfert de sorte à réaliser la procédure RACH sur une porteuse de composants de la deuxième pluralité de porteuses de composants de liaison montante sur la base d'au moins un élément parmi : une sélection arbitraire de la porteuse de composants de liaison montante, une fiabilité de la porteuse de composants de liaison montante configurée, une règle prédéterminée, lorsque l'information de la deuxième PCC de liaison montante n'est pas incluse dans la commande de transfert.

11. Le dispositif de communication de la revendication 7, dans lequel le programme est configuré pour ordonner au processeur de réaliser la procédure RACH sur cette au moins une des porteuses de composants de liaison montante conformément à la commande de transfert de sorte à réaliser la procédure RACH sur une porteuse de composants de liaison montante configurée sur un canal de contrôle de diffusion, BCCH, lorsque l'information de la deuxième PCC de liaison montante n'est pas incluse dans la commande de transfert.

12. Le dispositif de communication de la revendication 7, dans lequel dans un mode duplex à répartition dans le temps, TDD, une porteuse de composants est configurée afin d'être utilisée pour à la fois une porteuse de composants UL et une porteuse de composants DL.

13. Le dispositif de communication selon n'importe quelles revendications précédentes 7 à 12, comprenant en outre :
un émetteur configuré pour la transmission de liaison montante,
un récepteur configuré pour la réception de liaison descendante, dans lequel le dispositif de communication comprend un équipement utilisateur.

14. Le dispositif de communication selon la revendication 13, dans lequel l'équipement utilisateur comprend un téléphone mobile, un ordinateur portatif, un ordinateur de bureau ou un livre électronique.

15. Un produit-programme informatique, comprenant un moyen formant code de programme informatique (214) configuré pour réaliser n'importe quelle partie de la méthode des revendications 1 à 6 lorsqu'il est exécuté.
